# EUROPEAN PATENT SPECIFICATION

(11) **EP 1 437 797 B1**
(45) Date of publication and mention of the grant of the patent: **07.03.2007**
(21) Application number: 03029821.0
(22) Date of filing: 23.12.2003
(51) Int. Cl.: H01Q 21/24

(54) **Antenna coupling device for mobile terminal**
Eine Antennenkoppeleinrichtung für ein mobiles Gerät
Dispositif de couplage d'antenne pour un terminal mobile

(30) Priority: 24.12.2002 KR 2002083367
(43) Date of publication of application: 14.07.2004
(73) Proprietor: SAMSUNG ELECTRONICS CO., LTD., Suwon-si, Gyeonggi-do (KR)
(72) Inventor: Kim, Jae-Shik, Suwon-si Gyeonggi-do (KR); Song, Hyon-Myong, Suwon-si Gyeonggi-do (KR); Kim, Hong-Bae, Suwon-si Gyeonggi-do (KR); Wee, Jong-Cheon, Suwon-si Gyeonggi-do (KR)
(74) Representative: Grünecker, Kinkeldey, Stockmair & Schwanhäusser Anwaltssozietät

(56) References cited:
- EP-A- 0 964 474
- EP-A- 1 050 921
- US-A- 5 596 334

## Description

The present invention relates to an antenna coupling device for a mobile terminal with the features of the precharacterizing part of claim 1. Such an antenna coupling device is known from US-A-5596334.

Generally, a "mobile communication terminal" is a device adapted to allow the user to conduct wireless communication with a counterpart. Such a mobile communication terminal includes a hand held phone (HHP), a cordless telephone 2 (CT-2), a cellular phone, a digital phone, a personal communication system (PCS) phone, a personal digital assistant (PDA), etc. These mobile wireless terminals are classified into a bar type, a flip type, and a folder type in terms of their outer structures. Such conventional mobile terminals are essentially equipped with an antenna unit, a data input/output unit, and a data transmitting/receiving unit. For the data input/output unit, a liquid crystal display (LCD) is commonly used. For the data input/output unit, a key pad or touch screen is commonly used. Basically, the keypad used to input data has an arrangement of a plurality of keys including a conversation start button, that is, a send (SND) key, a cancel key, a correction or clear (CLR) key, numeral keys, character keys, an end (END) key, function keys, a power (PWR) key, etc.

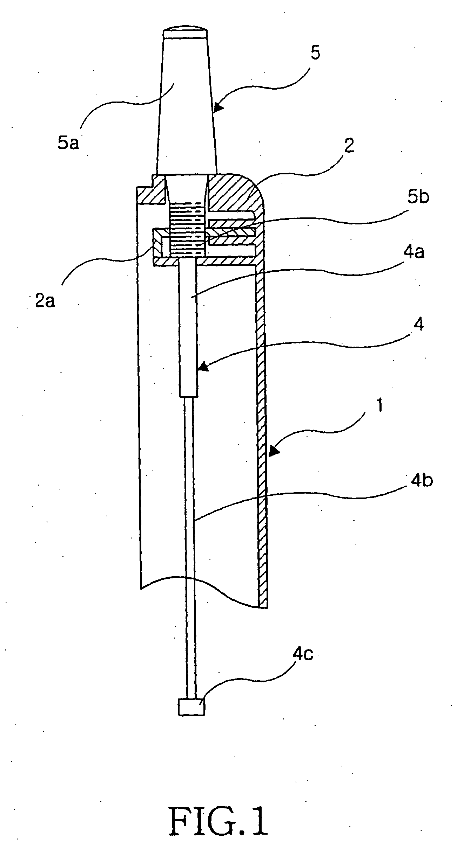

The antenna unit is mounted to a desired portion of a terminal body in the mobile terminal in order to receive a signal transmitted to the terminal. For such an antenna unit, a retractable antenna is mainly used which is a combination of a whip antenna and a helical antenna. An example of such a retractable antenna is illustrated in Fig. 1. As shown in Fig. 1, the retractable antenna includes a whip antenna 4 having a dummy rod 4a, a rod antenna 4b, and an antenna stopper 4c, and a helical antenna 5 having an antenna housing 5a internally provided with helical coils, and an antenna coupling member 5b coupled to an antenna bushing 2a fixed to a lower case frame 2 included in a terminal body 1 of a mobile terminal. The rod antenna 4b extends through the antenna housing 5a and antenna coupling member 5b such that it is extendable from and retractable into the terminal body 1.

Typically, there are two types of antenna coupling devices. In the case illustrated in Fig. 1, the first type antenna coupling device is used. The configuration of this first type antenna coupling device is shown in Fig. 2. In the first type antenna coupling device, the antenna coupling member 5b is formed at the antenna housing 5a such that it is integral with the antenna housing 5a, as shown in Fig. 2. The antenna coupling member 5b is adapted to be threadedly coupled with the antenna bushing 2a fixed to the lower case frame 2. In this case, the antenna has a circular cross-section, as shown in Fig. 3. The second type antenna coupling device is illustrated in Fig. 4. In this second type antenna coupling device, a hook-shaped coupling member 51 is formed at an antenna housing 50 such that it is integral with the antenna housing 50, as shown in Fig. 4. The hook-shaped coupling member 51 is adapted to be engaged, in a hooking fashion, with a rib (not shown) formed at the lower case frame 2. In this case, the antenna may have an oval or rectangular cross-section, as shown in Fig. 5a or 5b.

Where the first type antenna coupling device is used, the antenna housing having a circular cross-section can be reliably coupled with the antenna bushing in accordance with its rotation during assembly. However, where the antenna housing has an oval or rectangular cross-section a problem arises because it is necessary to use the second type antenna coupling device using the hooking method. Among the problems that arise, the rib may be easily damaged, or the hook coupling member may be inaccurately engaged with the rib. As a result, there may be a clearance space at the antenna housing, resulting in a loose antenna.

US-A-5596334 discloses an antenna assembly with integrated installation support, wherein the antenna assembly comprises an antenna element, a threaded sleeve or casing, an inductor element, and a threaded retainer as part of the housing of the corresponding radio communication device. The threaded sleeve may be positioned to engage with the threaded retainer and is also slidably mounted on a slender portion of the antenna element between head portion and end portion. The inductor is positioned on the retainer with its pin inserted into a receptacle.

In EP-A-0964474 an antenna device with a portable radio is described with a slide antenna inserted in a feeding hardware, first and second antenna elements, a joint, and an insulation cup. Joint and feeding hardware have grooves in which attachments rings are respectively inserted. Such an attachment ring has a number of contact springs that protrude towards the inside of the ring. These contact springs come into resilient contact with a plurality of different positions at the outer surface of the slide antenna section fitted into a support hole of the feeding hardware. This document discloses the preamble of claim 1.

EP-A-1050921 discloses a telephone with, in particular, an antenna. The antenna is slidably supported within a passage of the support. The support has an enlarged end portion at one end, where the antenna has an enlarged end portion that may be introduced in a passage if the antenna is extended.

In view of US-A-5596334 it is an object of the present invention to provide an antenna coupling device configured to selectively restrain an antenna coupling member fitted in an antenna housing to rotate the antenna coupling member by rotation of an antenna of the mobile terminal, thereby being capable of easily coupling antenna units which may have diverse shapes.

This object is solved by the features of claim 1.

Preferred embodiments are defined by the features of the dependent claims.

According to the invention, the assembly of antenna housing and antenna coupling member is improved, when the antenna unit is damaged, so that only the damaged element of the antenna unit can be replaced with a new one, thereby reducing maintenance costs.

Moreover, coupling between antenna housing of the antenna unit and an antenna coupling member is reinforced, thereby enhancing the coupling force of the antenna unit, so that it is possible to prevent deformation of the antenna unit during use while avoiding formation of a clearance space at a terminal body of the mobile terminal.

The above advantages of the present invention will become more apparent by describing in detail preferred embodiments thereof with reference to the attached drawings in which:
Fig. 1 is a sectional view illustrating an example of a conventional antenna coupling device for a mobile terminal;

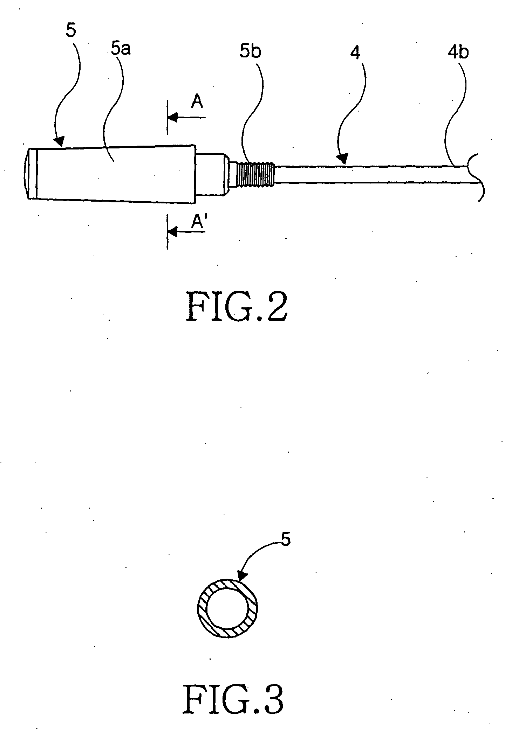

Fig. 2 is a perspective view illustrating the conventional antenna coupling device;
Fig. 3 is a cross-sectional view taken along the line A - A' of Fig. 2;

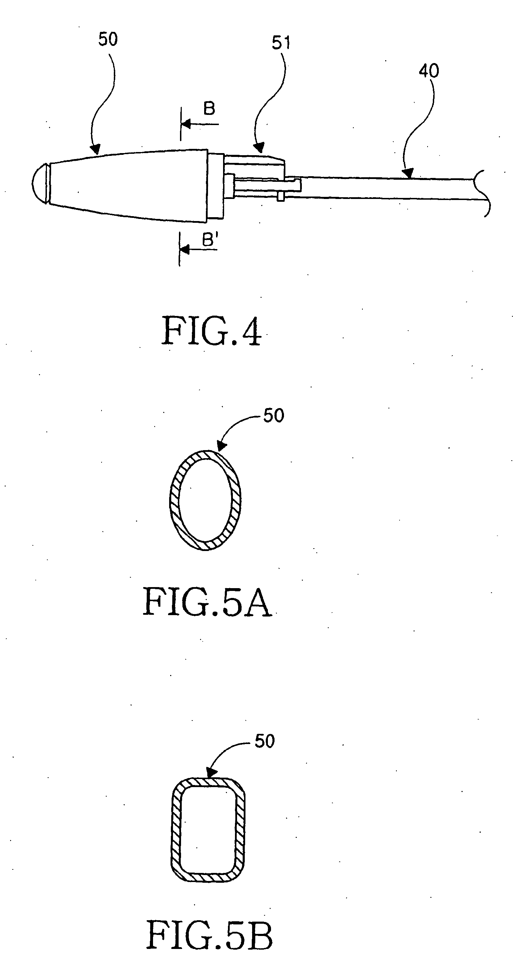

Fig. 4 is a perspective view illustrating another example of a conventional antenna coupling device for a mobile terminal;
Fig. 5a is a cross-sectional view taken along the line B - B' of Fig. 4;
Fig. 5b is a cross-sectional view similar to Fig. 5a, illustrating another antenna housing;

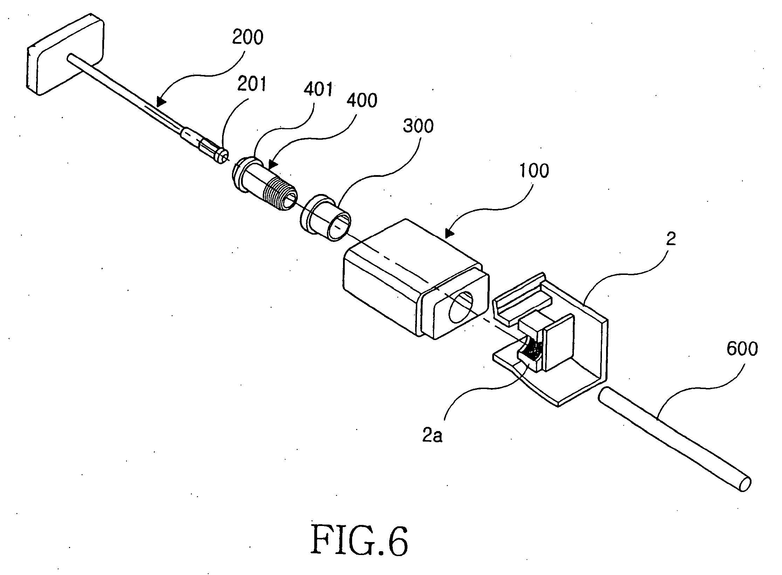

Fig. 6 is an exploded perspective view illustrating the configuration of an antenna coupling device for a mobile terminal in accordance with a first embodiment of the present invention;

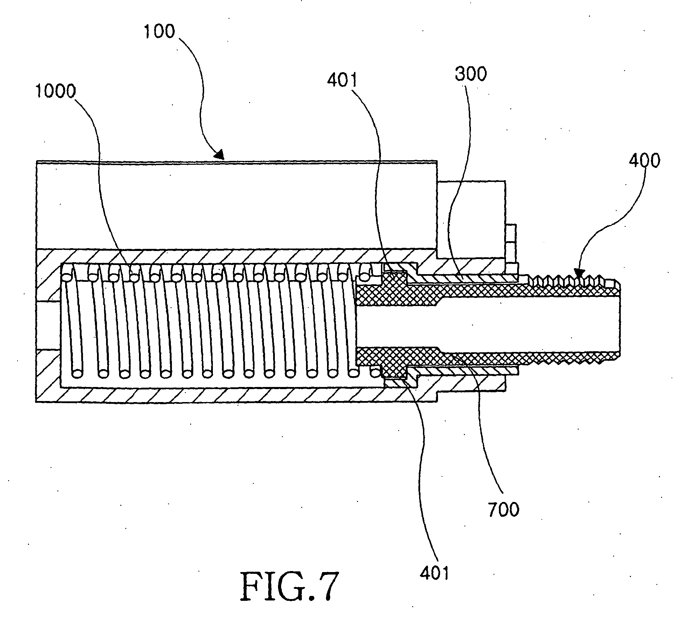

Fig. 7 is a sectional view illustrating a part of the antenna coupling device according to the first embodiment of the present invention in which an antenna coupling member included in the antenna coupling device is fitted in an antenna housing;

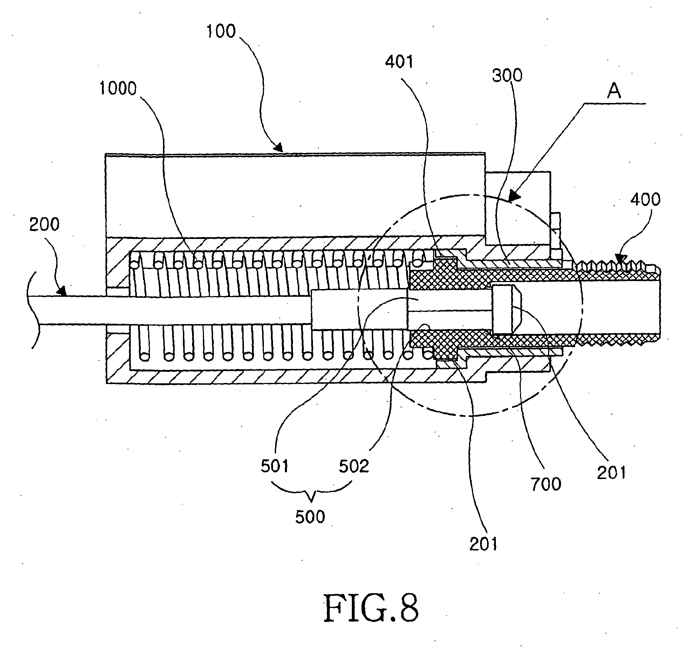

Fig. 8 is a sectional view illustrating a part of the antenna coupling device according to the first embodiment of the present invention in which a rod-shaped antenna is engaged with the antenna coupling member included in the antenna coupling device to restrain the antenna coupling member;

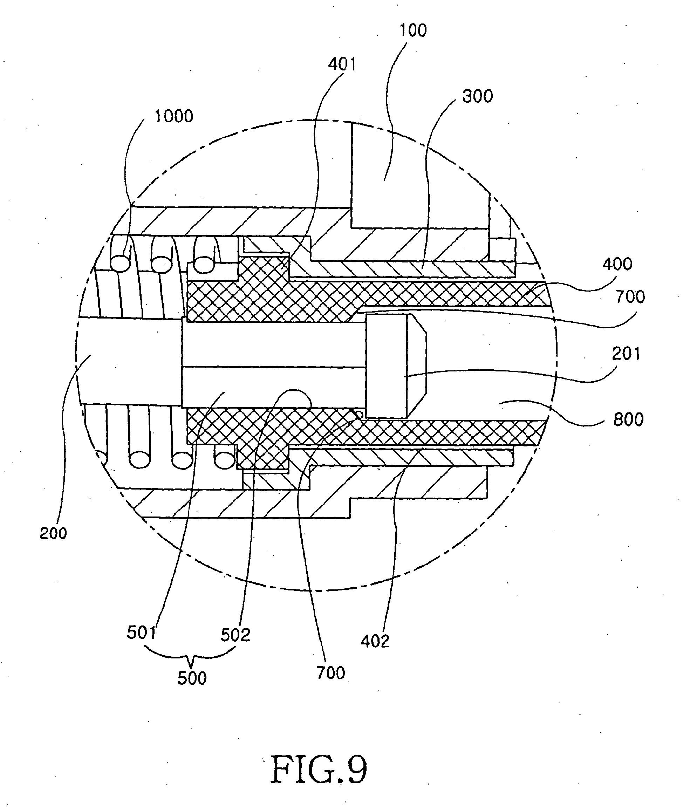

Fig. 9 is an enlarged view corresponding to a portion "A" of Fig. 8;

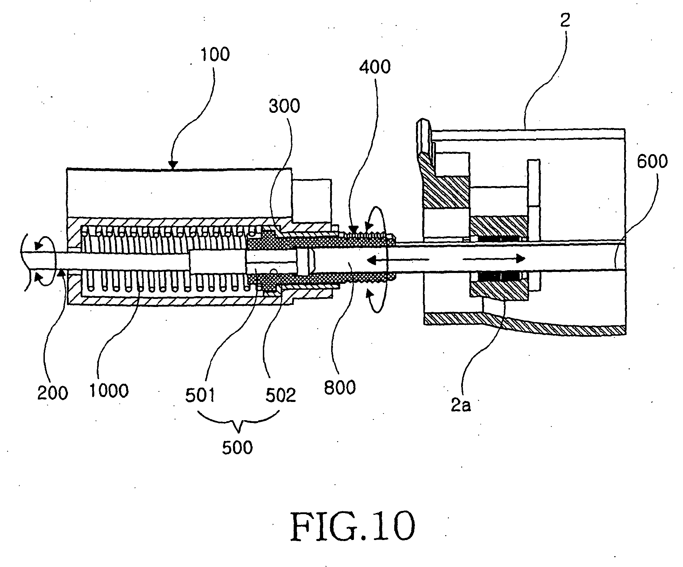

Fig. 10 is a partially-broken perspective view illustrating the antenna coupling device according to the first embodiment of the present invention before it is coupled to an antenna bushing;

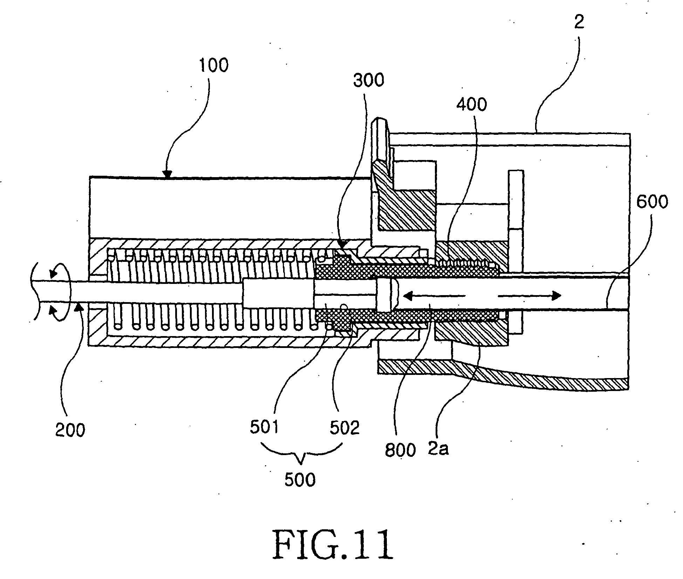

Fig. 11 is a partially-broken perspective view illustrating the antenna coupling device according to the first embodiment of the present invention after it is coupled to the antenna bushing with the rod antenna extended;

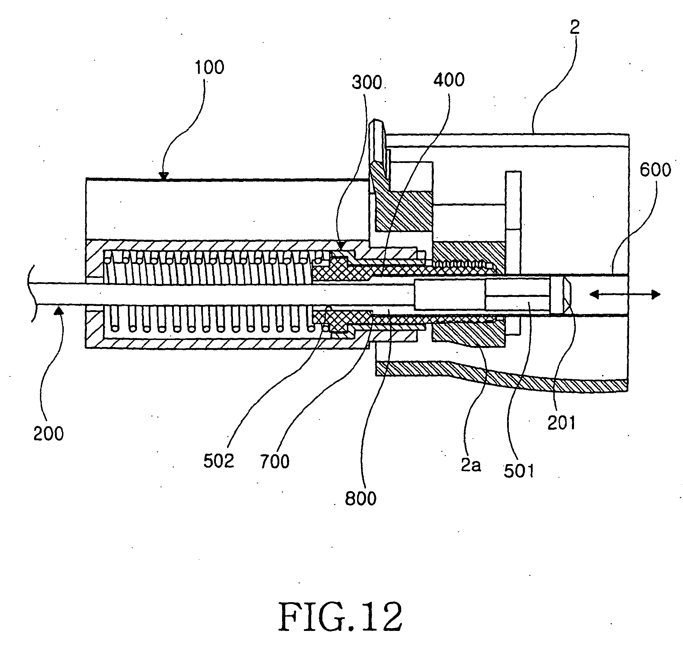

Fig. 12 is a partially-broken perspective view illustrating the antenna coupling device of Fig. 11 with the rod antenna partially retreated;

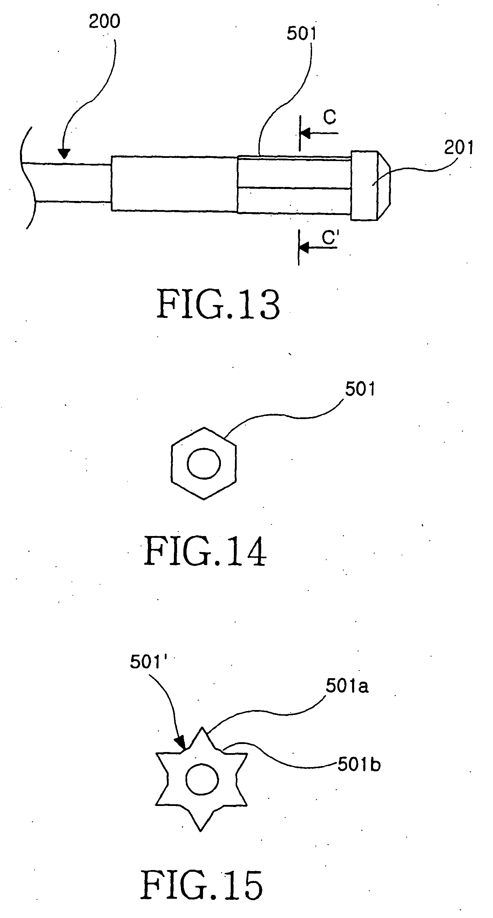

Fig. 13 is a side view illustrating a rod-shaped stopper included in the antenna coupling device according to the first embodiment of the present invention;
Fig. 14 is a cross-sectional view taken along the line C - C' of Fig. 13;
Fig. 15 is a cross-sectional view illustrating a second embodiment of the rod-shaped stopper;

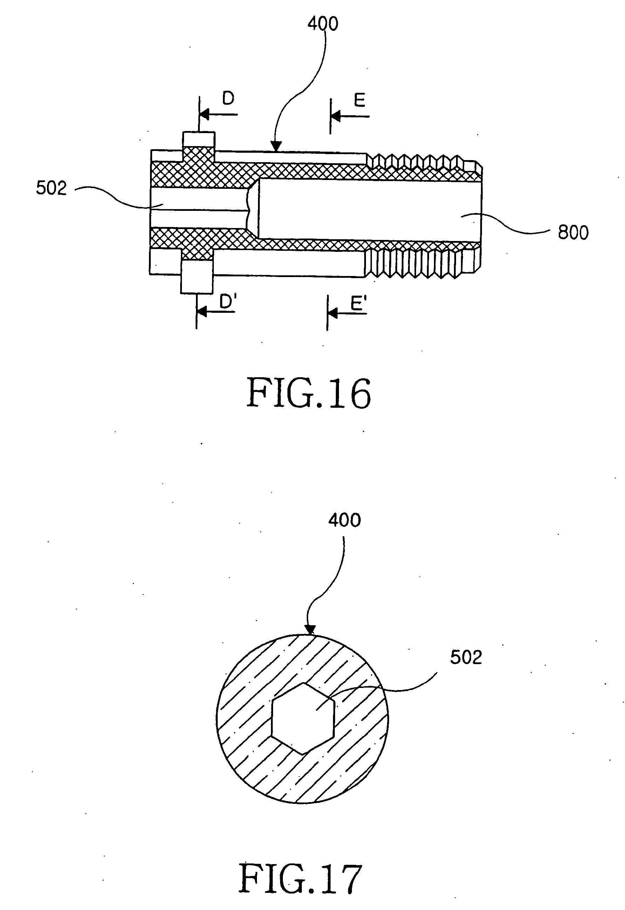

Fig. 16 is a sectional view illustrating the antenna coupling member included in the antenna coupling device according to the first embodiment of the present invention;
Fig. 17 is a cross-sectional view taken along the line D - D' of Fig. 16;

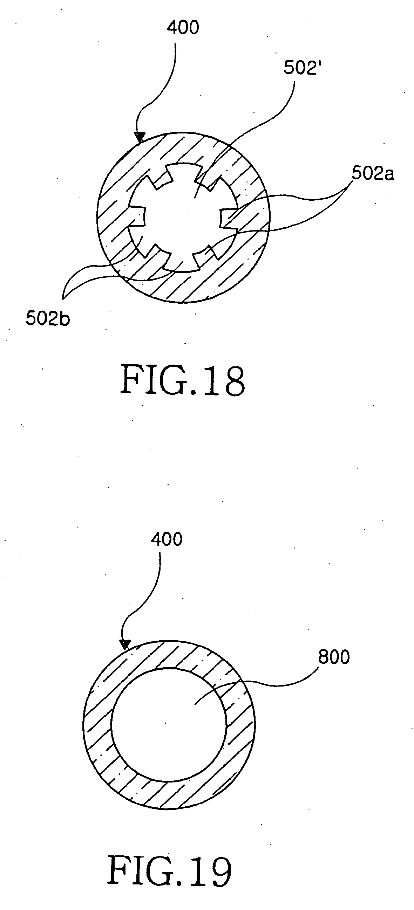

Fig. 18 is a sectional view illustrating the antenna coupling member included in the antenna coupling device according to the second embodiment of the present invention; and
Fig. 19 is a cross-sectional view taken along the line E - E' of Fig. 16.

Now, preferred embodiments of the present invention will be described in detail with reference to the annexed drawings.

Referring to Figs. 6 to 14, 16, 17, and 19, an antenna unit for a mobile terminal is illustrated which includes an antenna coupling device according to an embodiment of the present invention. The antenna unit includes an antenna housing 100 internally provided with a helical antenna 1000 consisting of helical coils, an antenna 200, a hollow antenna coupling member 400, and restraining means 500. The antenna coupling member 400 is arranged at a lower end of the antenna housing 100 such that it is rotatable for coupling to a terminal body. The antenna coupling member 400 is separate from the antenna housing 100. The restraining means 500 serves to selectively engage the antenna 200 with the antenna coupling member 400, thereby allowing the antenna coupling member 400 to be rotated along with rotation of the antenna 200. The restraining means 500 comprises an engaging element provided at a portion of the antenna 200 positioned near an antenna stopper 201 formed at an inner end of the antenna 200 received in the terminal body 1, and another engaging element provided at one end of the antenna coupling member 400 fitted in the antenna housing 100. The antenna coupling member 400 protrudes from the antenna housing 100 at the other end thereof. The antenna coupling member 400 is provided at the other end thereof with threads so that it can be threadedly coupled with an antenna bushing 2a fixed to a lower case frame 2 of the mobile terminal. The antenna coupling member 400 is preferably made of a metal material, taking into consideration the frequency characteristics of the antenna unit.

An annular reinforcing member 300 is interposed between the antenna housing 100 and the antenna coupling member 400. A stopper 401 radially protrudes from the outer circumferential surface of the antenna coupling member 400 near one end of the antenna coupling member 400, so as to prevent the antenna coupling member 400 from being separated from the annular reinforcing member 300, and thus, the antenna housing 100. The antenna coupling member 400 is rotatable within the annular reinforcing member 300. The annular reinforcing member 300 is also preferably made of a metal material, taking into consideration the frequency characteristics of the antenna unit.

Herein, the antenna coupling member 400 is coupled with the annular reinforcing member 300 and then, the stopper 201 which is the ending portion of the antenna 200 is forcibly pushed or inserted to the antenna coupling member 400 to be thereby coupled with the antenna 200 by punching operation.

The restraining means 500 comprises, for the engaging elements thereof, a rod-shaped stopper 501 provided at a portion of the antenna 200 positioned near the antenna stopper 201 and preferably has a polygonal cross-section. The restraining means 500 further comprises a stopper bore 502 formed at one end of the antenna coupling member 400, which also preferably has a polygonal cross-section corresponding to that of the rod-shaped stopper 501. When it is desired to threadedly couple the antenna coupling member 400 with the antenna bushing 2a, the rod-shaped stopper 501 is engaged with the stopper bore 502 so that the antenna coupling member 400 can be rotated along with rotation of the antenna 200. An inclined guide surface 700 (see Fig. 9) is formed at one end of the stopper bore 502 facing the antenna stopper 201. The inclined guide surface 700 comes into contact with an end of the rod-shaped stopper 501 opposite to the antenna stopper 201, thereby guiding the rod-shaped stopper 501 into the stopper bore 502. The stopper bore 502 preferably has a regular hexagonal shape. The rod-shaped stopper 501 has a size such that its diameter of its circumscribed circle is larger than the diameter of the antenna 200. The antenna coupling member 400 has a circular bore 800 extending axially from the stopper bore 502 through the antenna coupling member 400. The circular bore 800 serves to receive the rod-shaped stopper 501 separated from the stopper bore 502 when the antenna 200 is retracted into the terminal body 1. The circular bore 800 has a diameter larger than the diameter of the circumscribed circle of the rod-shaped stopper 501 so as to prevent the antenna coupling member 400 from being restrained by the antenna 200. A guide tube 600 (Fig. 10) is connected to the circular bore 800 in order to guide a sliding movement of the antenna 200 therethrough.

Now, another embodiment of the present invention associated with the restraining means will be described with respect to Figs. 15 and 18.

In accordance with this embodiment, the restraining means 500 comprises a rod-shaped stopper 501' extending from the inner end of the antenna 200 received in the terminal body. As shown in Fig. 15, the rod-shaped stopper 501' is provided at a circumferential surface thereof with a plurality of first protrusions 501a extending longitudinally along the rod-shaped stopper 501', and a plurality of first grooves 501b each extending longitudinally along the rod-shaped stopper 501' while being arranged between adjacent ones of the first protrusions 501a. Although not shown, the rod-shaped stopper 501' may have one first protrusion 501a, and one first groove 501b. In accordance with this embodiment, the restraining means 500 also comprises a stopper bore 502' formed at one end of the antenna coupling member 400, and adapted to engage with the rod-shaped stopper 501'. As shown in Fig. 18, the stopper bore 502' is provided at a circumferential surface thereof with a plurality of second protrusions 502a extending longitudinally along the stopper bore 502', and a plurality of second grooves 502b each extending longitudinally along the stopper bore 502' while being arranged between adjacent ones of the second protrusions 502a. Although not shown, the stopper bore 502' may have one second protrusion 502a, and one second groove 502b. The first protrusions and grooves 501a and 501b are engagable with the second grooves and protrusions 502b and 502a, respectively. In the illustrated case, the rod-shaped stopper 501' has a star shape. The protrusions and grooves 502a and 502b of the stopper bore 502' are symmetrically arranged. When the antenna 200 completely protrudes from the antenna housing 100, the rod-shaped stopper 501' faces the helical antenna 100. The rod-shaped stopper 501' has a size such that the diameter of its circumscribed circle is larger than the diameter of the antenna 200. Similarly to the previously-described embodiment, the antenna coupling member 400 has a circular bore 800 extending axially from the stopper bore 502' through the antenna coupling member 400. The circular bore 800 serves to receive the rod-shaped stopper 501' separated from the stopper bore 502' when the antenna 200 is retracted into the terminal body 1. The circular bore 800 has a diameter larger than the diameter of the circumscribed circle of the rod-shaped stopper 501' so as to prevent the antenna coupling member 400 from being restrained by the antenna 200. A guide tube 600 is connected to the circular bore 800 in order to guide a sliding movement of the antenna 200 therethrough.

Now, the assembling procedure and operation of the antenna coupling device having the above described configuration according to the first embodiment (Figs. 6-14) of the present invention will be described in detail with reference to the annexed drawings.

In order to mount the antenna housing 100 to the lower case frame 2 of the terminal body 1 in the mobile terminal, the antenna coupling member 400 is first mounted to the lower end of the antenna housing 100, as shown in Figs. 6 and 9. At this time, the annular reinforcing member 300 adapted to reinforce the coupling force of the antenna coupling member 400 is interposed between the antenna housing 100 and the antenna coupling member 400. That is, the antenna coupling member 400 is fitted in the annular reinforcing member 300 such that it is simultaneously rotatable. Thereafter, the antenna 200 is inserted into the antenna coupling member 400 such that it extends through the antenna housing 100.

When it is desired to threadedly couple the antenna coupling member 400 with the antenna bushing 2a, the antenna 200 completely protrudes from the antenna housing 100. In this state, the restraining means 500 can operate to engage the antenna 200 with the antenna coupling member 400. That is, when the antenna 200 completely protrudes from the antenna housing 100, the rod-shaped stopper 501, which extends from the inner end of the antenna 200 to a desired length while having a polygonal cross-section, as shown in Figs. 13 and 14, is engaged with the polygonal stopper bore 502 formed at one end of the antenna coupling member 400. Accordingly, the antenna coupling member 400 is restrained by the antenna 200. When the antenna 200 rotates in this state, the antenna coupling member 400 is rotated, as shown in Figs. 10 and 11. At this time, the antenna housing 100 is maintained at a fixed state. Since the antenna coupling member 400 is provided with threads at the other end thereof protruded from the annular reinforcing member 300, it can be threadedly coupled with the antenna bushing 2a by the threads in accordance with the rotation of the antenna coupling member 400.

When the antenna 200 is retracted through the antenna housing 100 into the terminal body 1 in the state in which the antenna coupling member 400 is threadedly coupled with the antenna bushing 2a, the rod-shaped stopper 501 is separated from the stopper bore 502, as shown in Fig. 12. The rod-shaped stopper 501 is then introduced into the circular bore 800 having a diameter larger than the diameter of the circumscribed circle of the rod-shaped stopper 501, as shown in Fig. 19. Accordingly, the antenna can be freely rotated, and the restraint of the antenna coupling member 400 by the antenna is released. Thus, the coupling of the antenna unit to the terminal body is completed.

The assembling procedure and operation of the antenna coupling device having the above described configuration according to the second embodiment of the present invention will be described.

As shown in Figs. 15 and 18, the restraining means 500 according to this embodiment comprises the rod-shaped stopper 501' extending from the inner end of the antenna 200 while being provided at a circumferential surface thereof with the first protrusions and grooves 501a and 501b extending longitudinally along the rod-shaped stopper 501', and the stopper bore 502' formed at one end of the antenna coupling member 400 while being provided at a circumferential surface thereof with the second protrusions and grooves 502a and 502b extending longitudinally along the stopper bore 502'.

Accordingly, when the antenna 200 completely protrudes from the antenna housing 100, the first protrusions and grooves 501a and 501b of the rod-shaped stopper 501' are engaged with the second grooves and protrusions 502b and 502a of the stopper bore 502', respectively. As a result, the antenna coupling member 400 is restrained by the antenna 200. When the antenna 200 rotates in this state, the antenna coupling member 400 is rotated. At this time, the antenna housing 100 is maintained at a fixed state. Accordingly, the antenna coupling member 400 can be threadedly coupled with the antenna bushing 2a by the threads formed at the other end of the antenna coupling member 400, in accordance with the rotation of the antenna coupling member 400.

When the antenna 200 is retracted through the antenna housing 100 into the terminal body 1 in the state in which the antenna coupling member 400 is threadedly coupled with the antenna bushing 2a, the first protrusions and grooves 501a and 501b of the rod-shaped stopper 501' are disengaged from the second grooves and protrusions 502b and 502a of the stopper bore 502', respectively. The rod-shaped stopper 501 is then introduced into the circular bore 800 having a diameter larger than the diameter of the circumscribed circle of the rod-shaped stopper 501, as shown in Fig. 19. Accordingly, the antenna can be freely rotated, and the restraint of the antenna coupling member 400 by the antenna is released. Thus, the coupling of the antenna unit to the terminal body is completed.

As apparent from the above description, the antenna coupling member is restrained by the antenna in accordance with the configuration of the restraining means. Accordingly, it is possible to easily couple the antenna unit to the terminal body while achieving an enhancement in coupling force.

## Claims

1. An antenna coupling device for coupling an antenna unit to a terminal body of a mobile terminal, the antenna unit including an antenna housing (100) coupled to the terminal body, and an antenna (200) extending through the antenna housing into the terminal body at an inner end thereof, comprising:
an antenna coupling member (400) rotatably fitted in the antenna housing (100) at one end of the antenna housing facing the terminal body, and
restraining means (500) for selectively engaging the antenna (200) with the antenna coupling member (400) to restrain the antenna coupling member by the antenna, thereby causing the antenna coupling member to be coupled to an antenna bushing (2a) provided at the terminal body in accordance with rotation of the antenna,
said restraining means (500) comprises a rod-shaped stopper (501, 501') provided at a portion of the antenna (200) positioned near an antenna stopper (201) formed at an inner end of the antenna **characterized in that** the rod-shaped stopper having a predetermined length and a polygonal cross-section, and
a stopper bore (502, 502') formed at one end of the antenna coupling member (400) and having a polygonal cross-section corresponding to that of the rod-shaped stopper (501, 501') and adapted to be engageable with the rod-shaped stopper, whereby the antenna and the antenna coupling member can rotate simultaneously.

2. The antenna coupling device according to claim 1, **characterized in that** the antenna coupling member (400) is fitted, at one end thereof, in the antenna housing (100) while having, at the other end thereof, threads to be threadedly coupled to the antenna bushing (2a).

3. The antenna coupling device according to claim 1 or 2, **characterized in that** the antenna coupling member (400) is made of a metal material.

4. The antenna coupling device according to one of claims 1 to 3, **characterized in that** the antenna coupling member (400) has a stopper (401) radially protruding from an outer circumferential surface of the antenna coupling member near one end of it fitted in the antenna housing (100), and adapted to prevent the antenna coupling member from being separated from the antenna housing.

5. The antenna coupling device according to one of claims 1 to 4, **characterized in that** it further comprises an annular reinforcing member (300) interposed between the antenna housing (100) and the antenna coupling member (400), and adapted to reinforce a coupling force of the antenna coupling member.

6. The antenna coupling device according to claim 5, **characterized in that** the annular reinforcing member (300) is made of a metal material.

7. The antenna coupling device according to one of the previous claims, **characterized in that** the antenna coupling member (400) is formed with an inclined guide surface (700) at one end of the stopper bore (502, 502') positioned toward the other end of the antenna coupling member, the inclined guide surface being adapted to come into contact with an end of the rod-shaped stopper (201) opposite to the other end of the antenna coupling member, thereby guiding the rod-shaped stopper into the stopper hole.

8. The antenna coupling device according to one of the previous claims, **characterized in that** the polygonal cross-section is a regular hexagonal cross-section.

9. The antenna coupling device according to one of the previous claims 1 to 8, **characterized in that** said polygonal cross-sections of the rod-shaped stopper (501'), and stopper bore (502') are formed by a plurality of first protrusions (501 a) extending longitudinally along the rod-shaped stopper, and a plurality of first grooves (401 b) each arranged between adjacent ones of the first protrusions (501 a), and by a plurality of second protrusions (502a) extending longitudinally along the stopper bore and a plurality of second grooves (502b) each arranged between adjacent ones of the second protrusions, respectively, which all are provided at a circumferential surface of the corresponding stopper or bore.

10. The antenna coupling device according to claim 9, **characterized in that** the rod-shaped stopper (501') has a star-shaped cross-section.

11. The antenna coupling device according to claim 9 or 10, **characterized in that** the protrusions and grooves (501 a, 502a; 501 b, 502b) are symmetrically formed, and each of the protrusions is provided with inclined surfaces.

12. The antenna coupling device according to one of the previous claims, **characterized in that** the rod-shaped stopper (501, 501') has a size such that the diameter of a circumscribed circle thereof is larger than the diameter of the antenna.

13. The antenna coupling device according to one of the previous claims, **characterized in that** the antenna coupling member (400) has a bore (800) with a circular cross-section extending axially from the stopper bore (502, 502') through the antenna coupling member while serving to receive the rod-shaped stopper (501, 501') separated from the stopper bore when the antenna is retracted into the terminal body (1), this bore (800) having a diameter larger than a diameter of a circumscribed circle of the rod-shaped stopper to prevent the antenna coupling member from being restrained by the antenna.

## Patentansprüche

1. Antennenanschlussvorrichtung zum Anschließen einer Antenneneinheit an ein Endgerätegehäuse eines mobilen Endgerätes, wobei die Antenneneinheit ein Antennengehäuse (100), das an dem Endgerätekörper angeschlossen wird, sowie eine Antenne (200) enthält, die sich durch das Antennengehäuse hindurch in den Endgerätekörper hinein an einem inneren Ende desselben erstreckt, wobei sie umfasst:
ein Antennenanschlusselement (400), das an einem Ende des Antennengehäuses, das dem Endgerätekörper zugewandt ist, drehbar in das Antennengehäuse (100) eingesetzt ist, und
eine Rückhalteeinrichtung (500), die die Antenne (200) selektiv mit dem Antennenanschlusselement (400) in Eingriff bringt, um das Antennenanschlusselement durch die Antenne zurückzuhalten, so dass das Antennenanschlusselement entsprechend der Drehung der Antenne an eine Antennenbuchse (2a) angeschlossen wird, die an dem Endgerätekörper vorhanden ist,
wobei die Rückhalteeinrichtung einen stabförmigen Stopfen (501, 501') umfasst, der an einem Abschnitt der Antenne (200) vorhanden ist, der nahe an einem Antennenstopfen (201) angeordnet ist, der an einem inneren Ende der Antenne ausgebildet ist; **dadurch gekennzeichnet, dass** der stabförmige Stopfen eine vorgegebene Länge und einen vieleckigen Querschnitt hat, und
eine Stopfenbohrung (502, 502'), die an einem Ende des Antennenanschlusselementes (400) ausgebildet ist und einen vieleckigen Querschnitt hat, der dem des stabförmigen Stopfens (501, 501') entspricht, und die mit dem stabförmigen Stopfen in Eingriff gebracht werden kann, so dass sich die Antenne und das Antennenanschlusselement gleichzeitig drehen können.

2. Antennenanschlussvorrichtung nach Anspruch 1, **dadurch gekennzeichnet, dass** das Antennenanschlusselement (400) an einem Ende desselben in das Antennengehäuse (100) eingesetzt ist, während es am anderen Ende desselben Gewindegänge zum Anschließen an die Antennenbuchse (2a) durch Schrauben aufweist.

3. Antennenanschlussvorrichtung nach Anspruch 1 oder 2, **dadurch gekennzeichnet, dass** das Antennenanschlusselement (400) aus einem Metallmaterial besteht.

4. Antennenanschlussvorrichtung nach einem der Ansprüche 1 bis 3, **dadurch gekennzeichnet, dass** das Antennenanschlusselement (400) einen Stopfen (401) aufweist, der radial von einer Außenumfangsfläche des Antennenanschlusselementes in der Nähe eines Endes desselben vorsteht, das in das Antennengehäuse (100) eingesetzt und so eingerichtet ist, dass verhindert wird, dass das Antennenanschlusselement von dem Antennengehäuse getrennt wird.

5. Antennenanschlussvorrichtung nach einem der Ansprüche 1 bis 4, **dadurch gekennzeichnet**, das sie des weiteren ein ringförmiges Verstärkungselement (300) umfasst, das zwischen das Antennengehäuse (100) und das Antennenanschlusselement (400) eingesetzt und so eingerichtet ist, dass es eine Anschlusskraft des Antennenanschlusselementes verstärkt.

6. Antennenanschlussvorrichtung nach Anspruch 5, **dadurch gekennzeichnet, dass** das ringförmige Verstärkungselement aus einem Metallmaterial besteht.

7. Antennenanschlussvorrichtung nach einem der vorangehenden Ansprüche, **dadurch gekennzeichnet, dass** das Antennenanschlusselement (400) mit einer geneigten Führungsfläche (700) an einem Ende der Stopfenbohrung (502, 502') versehen ist, das zu dem anderen Ende des Antennenanschlusselementes hin angeordnet ist, wobei die geneigte Führungsfläche so eingerichtet ist, dass sie mit einem Ende des stabförmigen Stopfens (201) gegenüber dem anderen Ende des Antennenanschlusselementes in Kontakt kommt und so den stabförmigen Stopfen in das Stopfenloch führt.

8. Antennenanschlussvorrichtung nach einem der vorangehenden Ansprüche, **dadurch gekennzeichnet, dass** der vieleckige Querschnitt der Querschnitt eines regelmäßigen Sechsecks ist.

9. Antennenanschlussvorrichtung nach einem der vorangehenden Ansprüche 1-8, **dadurch gekennzeichnet, dass** die vieleckigen Querschnitte des stabförmigen Stopfens (501') und der Stopfenbohrung (502') durch eine Vielzahl erster Vorsprünge (501 a) gebildet werden, die sich in Längsrichtung entlang des stabförmigen Stopfens erstrecken, sowie durch eine Vielzahl erster Nuten (401 b), die zwischen benachbarten der ersten Vorsprünge (501 a) angeordnet sind, und durch eine Vielzahl zweiter Vorsprünge (502a), die sich in Längsrichtung entlang der Stopfenbohrung erstrecken, sowie eine Vielzahl zweiter Nuten (502b), die jeweils zwischen benachbarten der zweiten Vorsprünge angeordnet sind, die sämtlich an einer Umfangsfläche des entsprechenden Stopfens beziehungsweise der Bohrung vorhanden sind.

10. Antennenanschlussvorrichtung nach Anspruch 9, **dadurch gekennzeichnet, dass** der stabförmige Stopfen (501') einen sternförmigen Querschnitt hat.

11. Antennenanschlussvorrichtung nach Anspruch 9 oder 10, **dadurch gekennzeichnet, dass** die Vorsprünge und Nuten (501 a, 502a); (501 b, 502b) symmetrisch ausgebildet sind und jeder der Vorsprünge mit geneigten Flächen versehen ist.

12. Antennenanschlussvorrichtung nach einem der vorangehenden Ansprüche, **dadurch gekennzeichnet, dass** der stabförmige Stopfen (501, 501') eine Größe hat, durch die der Durchmesser eines umbeschriebenen Kreises desselben größer ist als der Durchmesser der Antenne.

13. Antennenanschlussvorrichtung nach einem der vorangehenden Ansprüche, **dadurch gekennzeichnet, dass** das Antennenanschlusselement (400) eine Bohrung (800) mit einem kreisförmigen Querschnitt hat, die axial von der Stopfenbohrung (502, 502') durch das Antennenanschlusselement hindurch verläuft und dazu dient, den stabförmigen Stopfen (501, 501') aufzunehmen, der von der Stopfenbohrung getrennt ist, wenn die Antenne in den Endgerätekörper (1) eingeschoben ist, wobei diese Bohrung (800) einen Durchmesser hat, der größer ist als ein Durchmesser eines umbeschriebenen Kreises des stabförmigen Stopfens, um zu verhindern, dass das Antennenanschlusselement durch die Antenne zurückgehalten wird.

## Revendications

1. Dispositif de couplage d'antenne, destiné à coupler une unité d'antenne à un corps de terminal d'un terminal mobile, l'unité d'antenne comprenant un boîtier d'antenne (100), couplé au corps de terminal, et une antenne (200) qui s'étend au travers du boîtier d'antenne et dans le corps de terminal par son extrémité intérieure, comprenant :
un élément de couplage d'antenne (400) monté rotatif dans le boîtier d'antenne (100) à une extrémité du boîtier d'antenne faisant face au corps de terminal, et
un moyen de maintien (500), destiné à maintenir l'élément de couplage d'antenne (400) sur l'antenne (200), si bien que l'élément de couplage d'antenne est couplé à une douille d'antenne (2a) fournie au niveau du corps de terminal, en fonction de la rotation de l'antenne,
ledit moyen de maintien (500) comprenant une butée (501, 501') en forme de tige qui est fournie sur une partie de l'antenne (200) placée près d'une butée d'antenne (201) formée sur une extrémité intérieure de l'antenne,
**caractérisé en ce que** la butée en forme de tige a une longueur prédéterminée et une section transversale polygonale, et
un logement de butée (502, 502'), formé à une extrémité de l'élément de couplage d'antenne (400) et possédant une section transversale polygonale qui correspond à celle de la butée (501, 501') en forme de tige, adapté pour pouvoir s'engager avec la butée en forme de tige, si bien que l'antenne et l'élément de couplage d'antenne peuvent tourner simultanément.

2. Dispositif de couplage d'antenne selon la revendication 1, **caractérisé en ce que** l'élément de couplage d'antenne (400) est monté dans le boîtier d'antenne (100) par une de ses extrémités, tandis qu'il possède à l'autre extrémité des filets destinés à s'engager par vissage dans la douille d'antenne (2a).

3. Dispositif de couplage d'antenne selon la revendication 1 ou 2, **caractérisé en ce que** l'élément de couplage d'antenne (400) est fabriqué dans un matériau métallique.

4. Dispositif de couplage d'antenne selon l'une des revendications 1 à 3, **caractérisé en ce que** l'élément de couplage d'antenne (400) possède une butée (401) qui fait saillie radialement par rapport à la surface circonférentielle extérieure de l'élément de couplage d'antenne, près d'une extrémité de sa partie engagée dans le boîtier d'antenne (100), et qui est conçue pour empêcher que l'élément de couplage d'antenne ne soit séparé du boîtier d'antenne.

5. Dispositif de couplage d'antenne selon l'une des revendications 1 à 4, **caractérisé en ce qu'**il comprend, en outre, un élément annulaire de renforcement (300) interposé entre le boîtier d'antenne (100) et l'élément de couplage d'antenne (400) et conçu pour renforcer la force de couplage de l'élément de couplage d'antenne.

6. Dispositif de couplage d'antenne selon la revendication 5, **caractérisé en ce que** l'élément annulaire de renforcement (300) est fabriqué dans un matériau métallique.

7. Dispositif de couplage d'antenne selon l'une des revendications précédentes, **caractérisé en ce que** l'élément de couplage d'antenne (400) est formé avec une surface de guidage inclinée (700) à une extrémité du logement de butée (502, 502'), tournée vers l'autre extrémité de l'élément de couplage d'antenne, la surface de guidage inclinée étant conçue pour venir en contact avec une extrémité de la butée en forme de tige (201) opposée à l'autre extrémité de l'élément de couplage d'antenne, si bien que la butée en forme de tige est guidée dans le logement de butée.

8. Dispositif de couplage d'antenne selon l'une des revendications précédentes, **caractérisé en ce que** la section transversale polygonale est une section transversale hexagonale régulière.

9. Dispositif de couplage d'antenne selon l'une des revendications précédentes 1 à 8, **caractérisé en ce que** lesdites sections transversales polygonales de la butée en forme de tige (501') et du logement de butée (502') sont formées par une pluralité de premières saillies (501a) s'étendant longitudinalement le long de la butée en forme de tige et par une pluralité de premières rainures (401b) disposées chacune entre les saillies adjacentes des premières saillies (501a), ainsi que par une pluralité de secondes saillies (502a) s'étendant longitudinalement le long du logement de butée et par une pluralité de secondes rainures (502b) disposées chacune entre les saillies adjacentes des secondes saillies, respectivement, qui sont toutes ménagées sur une surface circonférentielle de la butée ou du logement correspondant.

10. Dispositif de couplage d'antenne selon la revendication 9, **caractérisé en ce que** la butée en forme de tige (501') a une section transversale en forme d'étoile.

11. Dispositif de couplage d'antenne selon la revendication 9 ou 10, **caractérisé en ce que** les saillies et les rainures (501a, 502a ; 501b, 502b) sont formées symétriquement et chacune des saillies est dotée de surfaces inclinées.

12. Dispositif de couplage d'antenne selon l'une des revendications précédentes, **caractérisé en ce que** la butée en forme de tige (501, 501') a une taille telle que le diamètre du cercle circonscrit est supérieur au diamètre de l'antenne.

13. Dispositif de couplage d'antenne selon l'une des revendications précédentes, **caractérisé en ce que** l'élément de couplage d'antenne (400) possède un alésage (800) de section transversale circulaire, qui s'étend axialement au travers de l'élément de couplage d'antenne, à partir du logement de butée (502, 502'), tandis qu'il sert à recevoir la butée en forme de tige (501, 501'), séparé du logement de butée lorsque l'antenne est rétractée dans le corps de terminal (1), cet alésage (800) ayant un diamètre supérieur au diamètre du cercle circonscrit de la butée en forme de tige, afin d'empêcher que l'élément de couplage d'antenne soit maintenu par l'antenne.
